# EUROPÄISCHE PATENTSCHRIFT

(11) **EP 1 523 726 B1**
(45) Veröffentlichungstag und Bekanntmachung des Hinweises auf die Patenterteilung: **19.10.2005**
(21) Anmeldenummer: 03764899.5
(22) Anmeldetag: 11.07.2003
(51) Int. Cl.: G06K 7/10, G06K 19/06

(54) **VERFAHREN ZUR VERARBEITUNG EINES MATRIXCODES**
METHOD FOR PROCESSING A MATRIX CODE
PROCEDE POUR TRAITER UN CODE MATRICIEL

(30) Priorität: 12.07.2002 DE 10232614
(43) Veröffentlichungstag der Anmeldung: 20.04.2005
(73) Patentinhaber: Secrypt Gmbh Encryption and Matrixcode Technologies, 12103 Berlin (DE)
(72) Erfinder: SCHLEDE, Matthias, 10781 Berlin (DE)
(74) Vertreter: Müller, Wolfram Hubertus
(86) Internationale Anmeldenummer: PCT/DE2003/002395
(87) Internationale Veröffentlichungsnummer: WO 2004/010368

(56) Entgegenhaltungen:
- EP-A- 0 953 931
- EP-A- 1 178 428
- WO-A-02/07065
- US-A- 5 189 292
- US-A- 5 883 968
- US-A1- 2001 028 000

## Beschreibung

Barcode- und Matrixcode-Systeme ermöglichen die Speicherung von Daten in Form bestimmter Muster (im weitesten Sinne Striche oder Punkte) auf Oberflächen wie beispielsweise Papier.

Bar- und Matrixcodes kommen in einem IT-System immer dann zum Einsatz, wenn es darum geht, über einen Ausdruck maschinenlesbar elektronische Daten auf unterschiedlichen Medien zu speichern. Die Daten bestehen in der Regel aus Ziffern oder alphanumerischen Zeichen.

Für den Ausdruck solcher Codes auf unterschiedlichen Materialien werden verschiedene Geräte (z.B. Tintenstrahl-, Laser-, Thermodrucker) und Technologien (z.B. Laserbeschriftung von Mikrochips) eingesetzt. Zum Lesen von Bar- und Matrixcodes werden ein Lesegerät (z.B. Scanner) und ein Decoder benötigt, die sich gemeinsam in einer Leseeinheit befinden können.

Matrixcodes sind eine Weiterentwicklung herkömmlicher Barcodes. In 2D-Codes können deutlich mehr Informationen gespeichert werden, als in herkömmlichen Barcodetypen.

Matrixcodes weisen in der Regel Markierungen auf - nachfolgend Marker genannt - mittels derer die Position von Informationseinheiten des Matrixcodes bestimmt werden kann. Aufgrund dieser Markierungshilfen können sie aus verschiedenen Richtungen gelesen werden. Zur Erfassung und der anschließenden Auswertung der 2D-Codes werden in der Regel CCD-Scanner (CCD = Charged Coupled Device) eingesetzt.

Die Informationseinheiten eines Matrixcodes werden nachfolgend als Spots bezeichnet. Der Name rührt daher, dass eine gesetzte Informationseinheit auf dem Ausgabemedium (z.B. Papier) unter dem Mikroskop als mehr oder weniger kreisförmiger Fleck, und nicht als Quadrat wie in der Ursprungsbilddatei, erscheint. Dieser Effekt erklärt sich beispielsweise bei Tintenstrahldruckern durch das Zerfließen der Tinte auf dem Ausgabemedium.

Die Digitalisierung eines Matrixcodes, der sich auf einem Ausgabemedium befindet, durch Einscannen, erfolgt für das zu beschreibende Verfahren grundsätzlich in einem Auflösungsbereich, in dem ein Spot die selbe Größenordnung wie ein Pixel der dabei generierten Bilddatei aufweist.

Die Gesamtheit der Pixelränder bildet ein quadratisches Gitter, das für die Digitalisierung über den Matrixcode gelegt wird. Je nach Versatz dieses Gitters bzgl. eines Spots wirkt dieser auf die Farbwerte von ein bis vier benachbarten Pixeln ein. Dieser Effekt, die hohe Dichte der Spots, sowie die ungenaue Darstellung auf dem Ausgabemedium führen zu einer unscharfen Darstellung der Spots im digitalisierten Matrixcode.

Eine Informationseinheit (Spot) kann den Zustand "gesetzt" oder "nicht gesetzt" haben. Das Verfahren zur Decodierung des Matrixcodes muss für jeden Spot entscheiden, ob dieser sich im Zustand "gesetzt" oder "nicht gesetzt" befindet. Dazu werden die Grauwerte jener Zellen des Gitters, deren Grauwert durch einen (gesetzten) Spot beeinflusst werden, durch eine Funktion (z.B. gewichtete Summierung) verknüpft und so ein Gesamtgrauwert für diese Zellen gebildet. Anhand dieses Grauwertes muss das Verfahren entscheiden, ob ein gesetzter oder ein nicht gesetzter Spot vorliegt.

Wegen der oben beschriebenen Einflüsse kann es passieren, dass Spots fälschlich als gesetzt oder nicht gesetzt klassifiziert werden. Falls die Anzahl solcher Fehlklassifikationen die Korrekturfähigkeit des Matrixcodes übersteigt, ist dessen Decodierung nicht mehr möglich.

Die vorliegende Erfindung hat zur Aufgabe, sich dieser Problematik anzunehmen. Insbesondere ist es eine Aufgabe der Erfindung, ein Verfahren zu schaffen, das eine geringere Häufigkeit von Fehlklassifikationen bei der Decodierung des Matrixcodes aufweist.

Diese Aufgabe wird durch die in den unabhängigen Ansprüchen angegebene Erfindung gelöst. Vorteilhafte Ausgestaltungen sind den Unteransprüchen zu entnehmen.

Erfindungsgemäß ist ein Verfahren geschaffen zur Verarbeitung eines Matrixcodes bestehend aus einer Vielzahl von Bildpunkten (Spots), wobei jedem Bildpunkt ein Grau- oder Farbwert zugeordnet ist, mit folgenden Schritten:
(a) Zuordnen jedes Bildpunktes zu einem digitalen Wert in Abhängigkeit von dessen Grau- oder Farbwert bezüglich eines ersten Schwellwertes;
(b) Zuordnen jedes Bildpunktes zu einer von mehreren Klassen in Abhängigkeit von dem digitalen Wert eines oder mehrerer benachbarter Bildpunkte; und
(c) Zuordnen jedes Bildpunktes einer Klasse zu einem digitalen Wert in Abhängigkeit von dessen Grau- oder Farbwert bezüglich eines klassenspezifischen Schwellwertes.

Insbesondere kann die Zuordnung jedes Bildpunktes zu einer der mehreren Klassen in Abhängigkeit von der Anzahl benachbarter Bildpunkte, die einem bestimmten digitalen Wert zugeordnet sind, durchgeführt werden. Ein Bildpunkt, der dem bestimmten digitalen Wert zugeordnet ist, weist einen Grau- oder Farbwert oberhalb des ersten Schwellwertes auf.

Die Klasseneinteilung erfolgt demnach in Abhängigkeit von der Anzahl "gesetzter" benachbarter Bildpunkte. Bei einer zeilen- und spaltenartigen Anordnung der Bildpunkte kann es fünf verschiedene Klassen geben entsprechend der möglichen Anzahl direkter gesetzter benachbarter Bildpunkte (null bis vier direkte gesetzte Nachbarn).

Vorzugsweise wird der Schritt (c) für jede der mehreren Klassen durchgeführt. Das heisst, dass innerhalb jeder der Klassen anhand des klassenspezifischen Schwellwertes geprüft wird, ob die in der jeweiligen Klasse enthaltenen Bildpunkte einem anderen digitalen Wert zugeordnet werden müssen.

Die Schritte (b) und (c) können iterativ wiederholt werden. Im Idealfall wird mit jeder Wiederholung die Fehleranzahl bei der Erkennung des Zustandes der eingelesenen Bildpunkte geringer.

Die Schritte (b) und (c) können beispielsweise eine vorbestimmte Anzahl von Malen wiederholt werden. Alternativ können die Schritte (b) und (c) solange wiederholt werden, bis die Anzahl der Zuordnungen von Bildpunkten zu einer neuen Klasse einen vorbestimmten Schwellwert unterschreitet. Die Iterationsschleife wird demnach abgebrochen, wenn mit keiner erheblichen Verringerung der Fehlerhäufigkeit mehr zu rechnen ist.

Es hat sich herausgestellt, dass das bisher beschriebene Verfahren besonders zuverlässig anwendbar und die Fehlerhäufigkeit bei der Decodierung des Matrixcodes weiter verringerbar ist, wenn die Ursprungsbilddaten, die den Matrixcode darstellen, vorverarbeitet werden.

Vorzugsweise ist dazu ein Verfahrensschnitt geschaffen zur Verarbeitung von Bilddaten, die einen Matrixcode bestehend aus einer Vielzahl von Bildpunkten darstellen, wobei jedem Bildpunkt ein oder mehrere gesetzte oder ein oder mehrere ungesetzte Pixel zugeordnet sind, und die Pixel benachbarter Bildpunkte durch einen oder mehrere ungesetzte Pixel getrennt sind, mit:
(h) Setzen derjenigen Pixel, die zwei benachbarte Bildpunkte trennen, denen jeweils gesetzte Pixel zugeordnet sind.

In besonders vorteilhafter Weise werden die Daten der Ursprungsbilddatei entsprechend diesem Verfahren vorverarbeitet, der durch die Bilddaten dargestellte Matrixcode auf ein Ausgabemedium (z.B. Papier) aufgebracht, von dort eingescannt, und die eingescannten Informationen entsprechend dem Verfahren zur Verarbeitung eines Matrixcodes verarbeitet.

Erfindungsgemäß ist außerdem ein Computer geschaffen, der zur Durchführung dieser Verfahren ausgebildet ist, sowie ein Computerprogramm zur Durchführung dieser Verfahren auf einem Computer.

Im Folgenden werden beispielhafte Ausgestaltungen der Erfindung anhand der Zeichnungen erläutert, und es zeigen:
Figur 1 schematisch Informationseinheiten einer Ursprungsbilddatei für einen Matrixcode;
Figur 2 schematisch die Bildpunkte eines Matrixcodes auf einem Ausgabemedium;
Figur 3 schematisch die Grauwertverteilung der Bildpunkte eines Matrixcodes auf einem Ausgabemedium;
Figur 4 schematisch die Grauwertverteilung einer Klasse von Bildpunkten des Matrixcodes auf einem Ausgabemedium;
Figur 5 schematisch die Grauwertverteilung einer weiteren Klasse von Bildpunkten des Matrixcodes auf einem Ausgabemedium; und
Figur 6 schematisch Informationseinheiten einer Ursprungsbilddatei für einen Matrixcode, wobei im Rahmen einer Vorverarbeitung Pixel benachbarter gesetzter Informationseinheiten miteinander verbunden sind.

Nachfolgend werden zur besseren Unterscheidung die Informationseinheiten der Ursprungsbilddatei als "Informationseinheiten", und die Informationseinheiten des ausgedruckten Matrixcodes als "Spots" bezeichnet. Die Informationseinheiten der Ursprungsbilddatei und die Spots des ausgedruckten Matrixcodes werden jeweils auch als Bildpunkte bezeichnet.

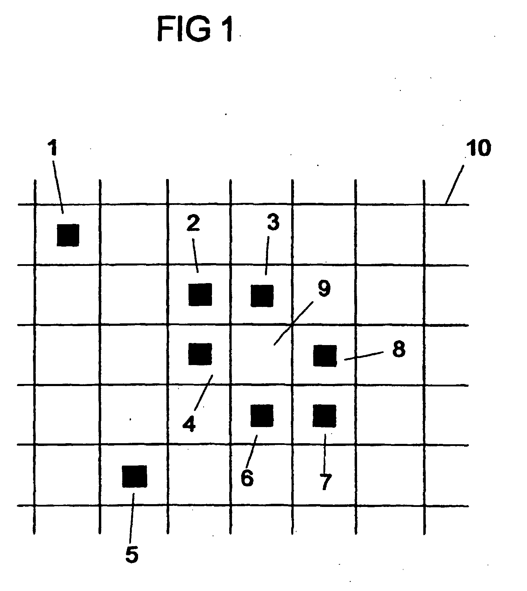

Figur 1 zeigt schematisch einige Informationseinheiten einer Urspungsbilddatei vor dem Ausdruck. Von diesen Informationseinheiten sind die Informationseinheiten 1 bis 8 gesetzt. Unter anderem ist eine Informationseinheit 9 nicht gesetzt. Weiterhin gezeigt ist ein (gedachtes) Gitter 10, das die Informationseinheiten voneinander trennt.

Jede Informationseinheit besteht aus 3x3 Pixeln, von denen bei einer gesetzten Informationseinheit nur das mittlere den logischen Wert 1 hat; die anderen acht Pixel haben den logischen Wert 0. Dies dient zur besseren Trennung gesetzter Informationseinheiten voneinander.

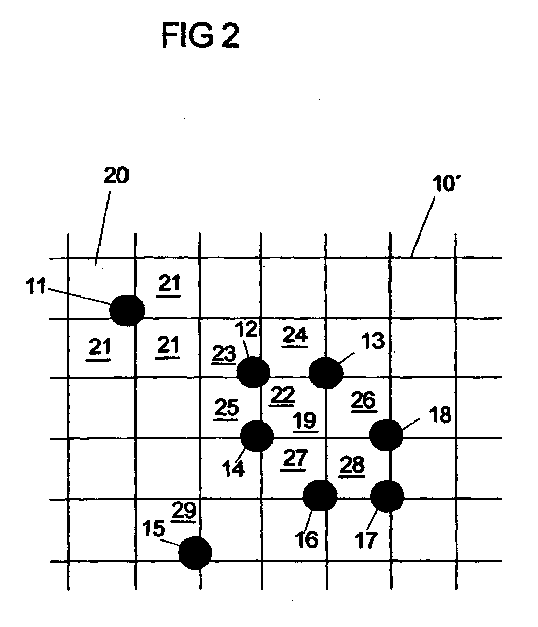

Figur 2 zeigt den Matrixcode nach Ausdruck der Bilddatei. Die gesetzten Informationseinheiten 1 bis 8 sind dabei durch die gesetzten Spots 11 bis 18 dargestellt. Die nicht gesetzte Informationseinheit 9 ist durch einen nicht gesetzten Spot 19 repräsentiert.

Ebenfalls dargestellt ist ein Gitter 10', das zum Scannen über den Matrixcode gelegt wird.

Wie oben erwähnt stimmen die Spots nicht exakt mit den Informationseinheiten der Bilddatei überein. Vielmehr treten beim Drucken Effekte wie beispielsweise das Zerfließen der Druckertinte auf, so dass gesetzte Spots kreisförmig und größer geraten, als die ursprünglichen gesetzten Informationseinheiten der Bilddatei.

Außerdem stimmt das Gitter 10', das zum Scannen über den Matrixcode gelegt wird, in der Regel nicht mit dem Gitter 10, das aus den Trennlinien zwischen Informationseinheiten der Urspungsbilddatei besteht, überein. Vielmehr ist das Gitter 10' gegenüber dem Gitter 10 verschoben.

Bei Verarbeitung der eingescannten Signale zur Wiederherstellung der Bilddatei muss für jeden Spot festgestellt werden, ob dieser gesetzt oder nicht gesetzt ist. Dies geschieht anhand der in den einzelnen Zellen gemessenen Grauwerte. Insbesondere werden in dem illustrierten Ausführungsbeispiel die Grauwerte von jeweils vier benachbarten Zellen mittels gewichteter Summierung verknüpft und ein Gesamtgrauwert bestimmt, anhand dessen entschieden wird, ob ein gesetzter oder ein nicht gesetzter Spot vorhanden ist. Dies ergibt sich daraus, dass in dem beschriebenen Beispiel ein gesetzter Spot die Grauwerte von bis zu vier benachbarten Zellen beeinflusst. Beispielsweise beeinflusst der gesetzte Spot 11 die Grauwerte der benachbarten Zellen 20 und 21.

Somit werden die Spots in zwei Klassen (Moden) eingeteilt; die Klassifizierung ist also bimodal.

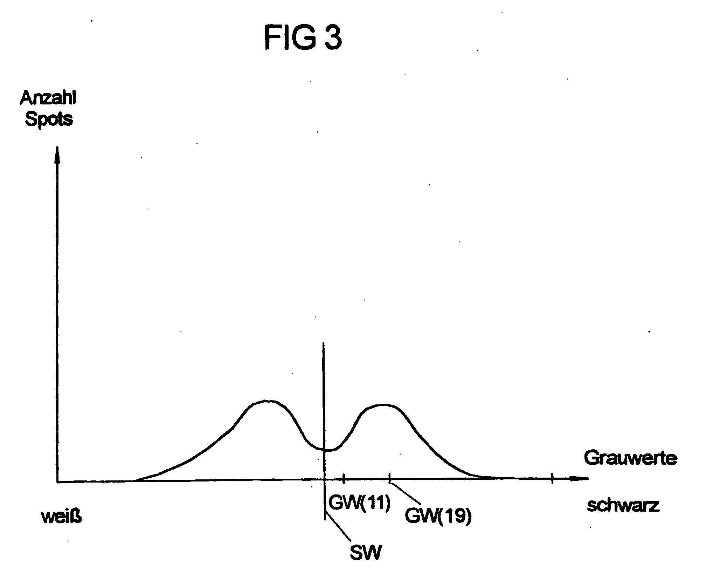

Figur 3 zeigt eine beispielhafte Häufigkeitsverteilung der Grauwerte der Spots aus Figur 2. Ein Schwellwert SW dient zur Einteilung der Spots in "gesetzt" und "ungesetzt".

Wir bereits erwähnt kann ein Spot wegen der hohen Dichte der Informationseinheiten und die oben beschriebenen Effekte den Grauwert in mehreren Zellen des Scangitters 10' beeinflussen. Durch die Verschiebung des Scangitters 10' gegenüber dem Gitter 10 ist es in dem gezeigten Beispiel sogar so, dass jeder der Spots 11 bis 19 innerhalb von vier benachbarten Zellen des Scangitters 10' verläuft.

Beispielsweise verläuft der Spot 11 hauptsächlich innerhalb einer Zelle 20. Somit ist der gemessene Grauwert innerhalb der Zelle 20 größer als in den benachbarten Zellen 21.

Problematisch ist der nicht gesetzte Spot 19. Sein Grauwert wird aus einer Verknüpfung der Grauwerte der Zellen 22, 26, 27 und 28 gebildet. Deren Grauwerte werden von den gesetzten Spots 12, 13, 14 und 16, 17, 18 beeinflusst. Dadurch kann es passieren, dass für den nicht gesetzten Spot 19 ein Grauwert ermittelt wird, der so hoch ist, dass ein vermeintlich gesetzter Spot erkannt wird.

Insbesondere kann der dem Spot 19 zugeordnete Grauwert sogar höher sein, als der von Spot 11. Das heißt, dass das Problem der Fehlklassifikation nicht durch Verschiebung des Schwellwertes SW zur Unterscheidung der Moden gelöst werden kann. Die den Spots 11 und 19 zugeordneten Grauwerte sind als GW(11) und GW(19) in Figur 3 eingetragen.

Die vorliegende Erfindung beruht auf der Erkenntnis, dass das Wissen um die gegenseitige Beeinflussung benachbarter Spots verwendet werden kann, um eine genauere Decodierung des gescannten Matrixcodes durchführen zu können.

Dazu werden mehrere Klassifizierungsschritte durchgeführt. In einem ersten Klassifizierungsschritt wird für jeden Spot bestimmt, ob dieser gesetzt oder nicht gesetzt ist. Ist dessen Grauwert größer als der Schwellwert SW (Figur 3), so gilt dieser als gesetzt. Liegt der Grauwert unterhalb des Schwellwertes SW, so ist der Spot nicht gesetzt.

In dem Beispiel der Figur 2 führt dies dazu, dass die Spots 11 bis 19 als gesetzt erkannt werden. Von diesen Spots wird der Spot 19 fehlerhaft als gesetzt erkannt.

Anschließend werden alle Spots (gesetzt und ungesetzt) in Abhängigkeit von der Anzahl der gesetzten Nachbarspots in verschiedene Klassen eingeteilt, d.h. in eine Klasse K0 mit keinem gesetzten Nachbarn, in eine Klasse K1 mit einem gesetzten Nachbarn, in eine Klasse K2 mit zwei gesetzten Nachbarn, in eine Klasse K3 mit drei gesetzten Nachbarn, und in eine Klasse K4 mit vier gesetzten Nachbarn.

In Figur 2 befinden sich beispielsweise die Spots 11 und 15 in Klasse K0, die Spots 12 bis 18 in der Klasse K2, und der Spot 19 in der Klasse K4.

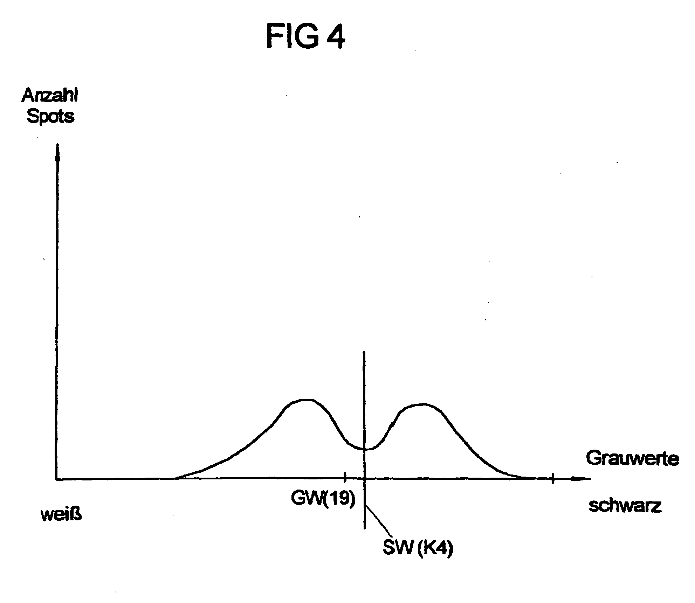

Innerhalb jeder dieser Klassen K0 bis K4 wird dann eine neue bimodale Klassifizierung jedes Spots durchgeführt. Figur 4 zeigt eine Grauwertverteilung von Spots der Klasse 4. Wegen der Erhöhung des Grauwertes jedes Spots dieser Klasse durch benachbarte Spots ist die Grauwertverteilung im Vergleich zu Figur 3 horizontal in Richtung zu höheren Grauwerten verschoben.

Dementsprechend ist auch der Schwellwert SW(K4) in Richtung zu höheren Grauwerten verschoben. Dies führt dazu, dass der Grauwert des Spots 19 nun unterhalb des Schwellwertes SW(K4) liegt. Die Spot 19 wird deshalb umklassifiziert von "gesetzt" in "nicht gesetzt".

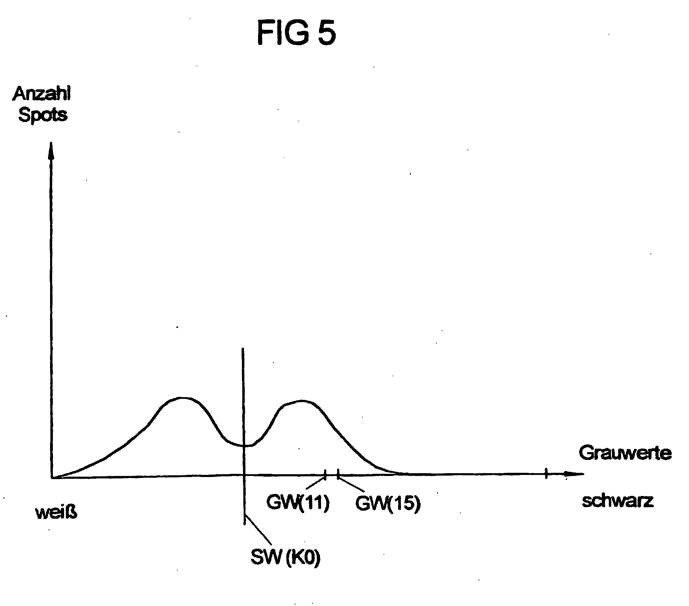

Eine Grauwertverteilung der Klasse K0 könnte wie in Figur 5 illustriert aussehen. Der Schwellwert SW(K0) ist hier in Richtung "weiß" verschoben. Gezeigt sind auch die Grauwerte GW(11) und GW(15) der Spots 11 bzw. 15. Diese liegen sowohl in der Grauwertverteilung von Figur 3 als auch in der Grauwertverteilung von Figur 5 rechts des Schwellwertes, so dass keine Umklassifizierung stattfindet.

Nach dem dieser Schritt für alle Klassen K0 bis K4 durchgeführt worden ist, kann dieser iterativ wiederholt werden. Da nämlich beispielsweise der Spot 19 von "gesetzt" in "nicht gesetzt" umklassifiziert worden ist, hat dies Auswirkungen auf die Nachbarspots des Spots 19. Die Spots 13, 14, 16 und 18 sind danach nicht mehr in der Klasse K2, sondern in der Klasse K1 enthalten, d.h. diese weisen nur noch einen gesetzten Nachbarn auf (statt wie zuvor zwei). Da in der Klasse K1 eine andere Grauwertverteilung vorliegt und damit ein anderer Schwellwert festgesetzt ist, kann dies zu weiteren Umklassifizierungen führen.

Diese Schritte werden solange wiederholt, bis eine ausreichende Korrektur stattgefunden hat. Beispielsweise kann die Iteration dann abgebrochen werden, wenn die Anzahl der Umklassifizierungen einen Schwellwert unterschreitet, oder nach Durchführung einer vorbestimmten Anzahl von Iterationen.

Die ursprüngliche Bilddatei wird vor einem Aufbringen des Matrixcodes auf einem Ausgabemedium (Papier) vorverabeitet, um die Fehleranzahl bei der anschließenden Decodierung des Matrixcodes zu reduzieren. Diese Vorverarbeitung macht sich die gegenseitige Beeinflussung benachbarter Informationseinheiten zu Nutze.

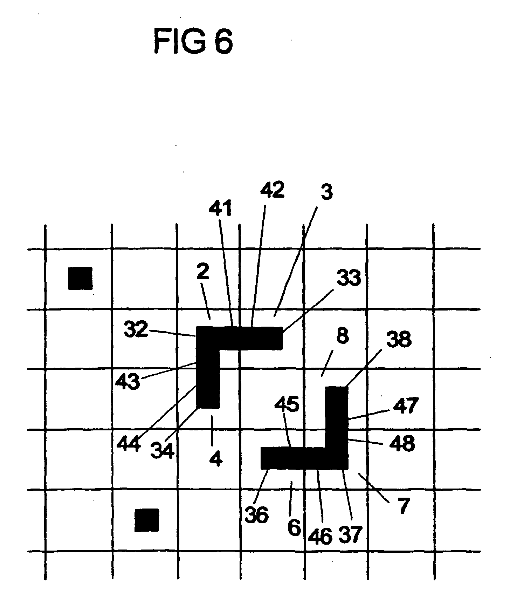

Gemäß dieser Vorverarbeitung werden die Pixel von benachbarten gesetzten Informationseinheiten miteinander verbunden. Dies ist in Figur 6 illustriert. Figur 6 zeigt die Bilddatei aus Figur 1 nach der Vorverarbeitung.

Insbesondere werden dabei diejenigen Pixel benachbarter Informationseinheiten, die zwischen den Pixeln mit dem logischen Wert 1 liegen, ebenfalls auf 1 gesetzt.

In dem illustrierten Beispiel sind die Pixel 32, 33, 34, 36, 37 und 38 der gesetzten Informationseinheiten 2, 3, 4, 6, 7 und 8 der ursprünglichen Bilddatei bereits vor deren Vorverarbeitung auf den logischen Wert 1 gesetzt. Durch die Vorverarbeitung werden auch die Pixel 41, 42 zwischen den Pixeln 32 und 33 der benachbarten gesetzten Informationseinheiten 2 und 3 auf den logischen Wert 1 gesetzt. Dasselbe gilt für die Pixel 43 bis 48.

Die Vorverarbeitung hat zur Folge, dass die gegenseitige Beeinflussung benachbarter gesetzter Spots bewusst verstärkt wird, während der Einfluss eines gesetzten Spots auf einen benachbarten nicht gesetzten Spot unverändert bleibt. Dies hat eine zusätzlich Verringerung von Fehlklassifizierungen zur Folge.

Anzumerken ist, dass die Erfindung nicht auf die beschriebenen beispielhaften Ausgestaltungen beschränkt ist, sondern Variationen im Rahmen des durch die Ansprüche festgelegten Schutzbereiches einschließt. Insbesondere ist die Anzahl der Pixel pro Bildpunkt frei wählbar, ebenso wie die Anzahl Pixel zur Trennung benachbarter Informationseinheiten.

## Patentansprüche

1. Verfahren zur Verarbeitung eines Matrixcodes bestehend aus einer Vielzahl von Bildpunkten, wobei jedem Bildpunkt ein Grau- oder Farbwert zugeordnet ist, mit folgenden Schritten:
(a) Zuordnen jedes Bildpunktes zu einem digitalen Wert in Abhängigkeit von dessen Grau- oder Farbwert bezüglich eines ersten Schwellwertes;
(b) Zuordnen jedes Bildpunktes zu einer von mehreren Klassen in Abhängigkeit von dem digitalen Wert eines oder mehrerer benachbarter Bildpunkte; und
(c) Zuordnen jedes Bildpunktes einer Klasse zu einem digitalen Wert in Abhängigkeit von dessen Grau- oder Farbwert bezüglich eines klassenspezifischen Schwellwertes.

2. Verfahren nach Anspruch 1, wobei die Zuordnung jedes Bildpunktes zu einer der mehreren Klassen in Abhängigkeit von der Anzahl benachbarter Bildpunkte, die einem bestimmten digitalen Wert zugeordnet sind, durchgeführt wird.

3. Verfahren nach Anspruch 2, wobei ein Bildpunkt, der dem bestimmten digitalen Wert zugeordnet ist, einen Grau- oder Farbwert oberhalb des ersten Schwellwertes aufweist.

4. Verfahren nach einem der vorhergehenden Ansprüche, mit:
(d) Durchführen des Schrittes (c) für jede der mehreren Klassen.

5. Verfahren nach einem der vorhergehenden Ansprüche, wobei die Bildpunkte in Zeilen und Spalten angeordnet sind, und die Zuordnung jedes Bildpunktes zu einer der Klassen abhängig von dem digitalen Wert der innerhalb der selben Zeile und/oder Spalte direkt benachbarten Bildpunkte durchgeführt wird.

6. Verfahren nach einem der vorhergehenden Ansprüche, mit:
(e) Wiederholen der Schritte (b) und (c).

7. Verfahren nach Anspruch 6, mit:
(f) Durchführen einer vorbestimmten Anzahl von Wiederholungen des Schrittes (e).

8. Verfahren nach Anspruch 6, mit:
(g) Wiederholen des Schrittes (e) solange, bis die Anzahl der Zuordnungen von Bildpunkten zu einer neuen Klasse einen vorbestimmten Schwellwert unterschreitet.

9. Verfahren zur Verarbeitung eines Matrixcodes bestehend aus einer Vielzahl von Bildpunkten, wobei jedem Bildpunkt ein oder mehrere gesetzte oder ein oder mehrere ungesetzte Pixel zugeordnet sind, und die Pixel benachbarter Bildpunkte durch einen oder mehrere ungesetzte Pixel getrennt sind, mit folgenden Schritten:
(h) Setzen derjenigen Pixel, die zwei benachbarte Bildpunkte trennen, denen jeweils gesetzte Pixel zugeordnet sind; und
Erzeugen des Matrixcodes anhand der verarbeiteten Bilddaten auf einem Ausgabemedium;
Einlesen des Matrixcodes von dem Ausgabemedium zur Verarbeitung gemäß dem Verfahren nach einem der vorangegangenen Ansprüche.

10. Computerprogramm, zur Durchführung des Verfahrens nach einem der Ansprüche 1 bis 9 auf einem Computer.

11. Computer, in dem das Programm gemäß Anspruch 10 geladen ist.

## Claims

1. Method for processing a matrix code comprising a multiplicity of picture elements, where each picture element has an associated grey-scale or colour value, having the following steps:
(a) each picture element is associated with a digital value on the basis of its grey-scale or colour value relative to a first threshold value;
(b) each picture element is associated with one of a plurality of classes on the basis of the digital value of one or more adjacent picture elements; and
(c) each picture element is associated with a class to form a digital value on the basis of its grey-scale or colour value relative to a class-specific threshold value.

2. Method according to Claim 1, where the association between each picture element and one of the plurality of classes is made on the basis of the number of adjacent picture elements which are associated with a particular digital value.

3. Method according to Claim 2, where a picture element which is associated with the particular digital value has a grey-scale or colour value above the first threshold value.

4. Method according to one of the preceding claims, where:
(d) step (c) is carried out for each of the plurality of classes.

5. Method according to one of the preceding claims, where the picture elements are arranged in rows and columns, and the association between each picture element and one of the classes is made on the basis of the digital value of the picture elements which are directly adjacent within the same row and/or column.

6. Method according to one of the preceding claims, where:
(e) steps (b) and (c) are repeated.

7. Method according to Claim 6, where:
(f) step (e) is repeated a predetermined number of times.

8. Method according to Claim 6, where:
(g) step (e) is repeated until the number of associations between picture elements and a new class is below a predetermined threshold value.

9. Method for processing a matrix code comprising a multiplicity of picture elements, where each picture element has one or more associated set or one or more associated unset pixels, and the pixels of adjacent picture elements are separated by one or more unset pixels, having the following steps:
(h) those pixels which separate two adjacent picture elements which have respective set pixels associated with them are set; and
the matrix code is generated using the processed picture data on an output medium;
the matrix code is read in from the output medium for the purpose of processing in line with the method according to one of the preceding claims.

10. Computer program for carrying out the method according to one of Claims 1 to 9 on a computer.

11. Computer in which the program according to Claim 10 has been loaded.

## Revendications

1. Procédé pour traiter un code matriciel composé d'un grand nombre de pixels, une valeur de gris ou de couleur étant attribuée à chaque pixel, comprenant les étapes suivantes :
(a) Affectation de chaque pixel à une valeur numérique en fonction de sa valeur de gris ou de couleur concernant une première valeur de seuil ;
(b) Affectation de chaque pixel à une classe parmi plusieurs en fonction de la valeur numérique d'un ou de plusieurs pixels voisins ; et
(c) Affectation de chaque pixel d'une classe à une valeur numérique en fonction de sa valeur de gris ou de couleur concernant une valeur de seuil spécifique à la classe.

2. Procédé selon la revendication 1, avec lequel l'affectation de chaque pixel à l'une des plusieurs classes est effectuée en fonction du nombre de pixels voisins qui sont associés à une valeur numérique donnée.

3. Procédé selon la revendication 2, avec lequel un pixel qui est affecté à la valeur numérique donnée présente une valeur de gris ou de couleur au-dessus de la première valeur de seuil.

4. Procédé selon l'une des revendications précédentes comprenant :
(d) Exécution de l'étape (c) pour chacune des plusieurs classes.

5. Procédé selon l'une des revendications précédentes, avec lequel les pixels sont disposés en lignes et en colonnes et l'affectation de chaque pixel à l'une des classe est effectuée en fonction de la valeur numérique des pixels directement voisins au sein de la même ligne et/ou colonne.

6. Procédé selon l'une des revendications précédentes, comprenant :
(e) Répétition des étapes (b) et (c).

7. Procédé selon la revendication 6, comprenant :
(f) Exécution d'un nombre prédéfini de répétitions de l'étape (e).

8. Procédé selon la revendication 6, comprenant :
(g) Répétition de l'étape (e) jusqu'à ce que le nombre d'affectations des pixels à une nouvelle classe devienne inférieur à une valeur de seuil prédéfinie.

9. Procédé pour traiter un code matriciel composé d'un grand nombre de pixels, un ou plusieurs pixels définis ou alors un ou plusieurs pixels non définis étant affectés à chaque pixel, et les pixels des pixels voisins étant séparés par un ou plusieurs pixels non définis, comprenant les étapes suivantes :
(h) définition des pixels qui séparent deux pixels voisins et auxquels sont à chaque fois affectés des pixels définis ; et
Génération du code matriciel au moyen des données d'image traitées sur un support de sortie ;
Lecture du code matriciel depuis le support de sortie en vue du traitement conformément au procédé selon l'une des revendications précédentes.

10. Programme informatique pour mettre en oeuvre le procédé selon l'une des revendications 1 à 9 sur un ordinateur.

11. Ordinateur dans lequel est chargé le programme selon la revendication 10.
